(19) Europäisches Patentamt
European Patent Office
Office européen des brevets

(11) **EP 1 680 310 B1**

(12) **EUROPÄISCHE PATENTSCHRIFT**

(45) Veröffentlichungstag und Bekanntmachung des Hinweises auf die Patenterteilung:
**12.12.2012 Patentblatt 2012/50**

(21) Anmeldenummer: **04790393.5**

(22) Anmeldetag: **14.10.2004**

(51) Int Cl.:
**B60R 21/0132** (2006.01)   **B60R 21/0134** (2006.01)

(86) Internationale Anmeldenummer:
**PCT/EP2004/011532**

(87) Internationale Veröffentlichungsnummer:
**WO 2005/037609 (28.04.2005 Gazette 2005/17)**

(54) **VERFAHREN ZUM HERSTELLEN EINES KRAFTFAHRZEUGES**

METHOD FOR PRODUCING A MOTOR VEHICLE

PROCEDE DE FABRICATION DE VEHICULE AUTOMOBILE

(84) Benannte Vertragsstaaten:
**AT BE BG CH CY CZ DE DK EE ES FI FR GB GR HU IE IT LI LU MC NL PL PT RO SE SI SK TR**

(30) Priorität: **17.10.2003 DE 10348997**
**17.10.2003 DE 10348998**
**17.10.2003 DE 10348999**
**31.01.2004 DE 102004004951**

(43) Veröffentlichungstag der Anmeldung:
**19.07.2006 Patentblatt 2006/29**

(73) Patentinhaber:
• **Volkswagen Aktiengesellschaft**
**38440 Wolfsburg (DE)**
• **AUDI AG**
**85045 Ingolstadt (DE)**
• **Andata Entwicklungstechnologie GmbH & Co. KG**
**5400 Hallein (AT)**

(72) Erfinder:
• **KUHN, Andreas**
**A-5440 Kochl (AT)**
• **PALAU MOTINO, Antoni**
**E-08033 Barcelona (ES)**
• **NEUBOHN, André**
**38440 Wolfsburg (DE)**
• **WEISS, Christian**
**85113 Böhmfeld (DE)**

(74) Vertreter: **Geske, Kerstin**
**Volkswagen AG**
**Patentabteilung EZP**
**Postfach 1770**
**38436 Wolfsburg (DE)**

(56) Entgegenhaltungen:
EP-A- 1 247 699    WO-A1-03/013911
WO-A1-03/106226    DE-A- 10 035 505
DE-A- 10 040 111    DE-A1- 19 729 960
DE-C- 10 103 661    US-A1- 2002 147 533
US-B1- 6 186 539

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Herstellen eines Kraftfahrzeuges, wobei zumindest ein Crashsensor zum Messen einer Bewegungsgröße des Kraftfahrzeuges, ein Steuergerät zur Ermittlung eines Zündsignals und eine mittels des Zündsignals steuerbare Insassenschutzeinrichtung in dem Kraftfahrzeug angeordnet werden. Eine derartige Insassenschutzeinrichtung kann einen Airbag und/oder einen Gurtstraffer umfassen bzw. ein Airbag und/oder ein Gurtstraffer sein.

Airbagsysteme sind z.B. in dem veröffentlichten Artikel XP002312399 "Hardware und Mechanik realer Airbagsteuerungen" offenbart.

Die US 5 583 771, die US 5 684 701 und die US 6 532 508 B1 offenbaren die Ansteuerung eines Airbags mittels eines neuronalen Netzes in Abhängigkeit eines Ausgangssignals eines Beschleunigungssensors.

Die DE 198 54 380 A1 offenbart ein Verfahren zum Erkennen der Schwere eines Fahrzeugzusammenstosses, bei dem die Ausgangssignale einer Mehrzahl von Beschleunigungssensoren einem neuronalen Netz zugeführt werden. Bei dem Verfahren wird der Beginn der Auswertung der Ausgangssignale der Beschleunigungssensoren durch ein Triggersignal bestimmt, das von einem Beschleunigungssensor ausgegeben wird, wenn sein Ausgangssignal einen vorgegebenen Schwellwert überschreitet. Dieser Beschleunigungssensor veranlasst die anderen Beschleunigungssensoren, zu ein- und demselben Zeitpunkt das jeweilige Ausgangssignal zu liefern. Es wird weiterhin vorgeschlagen, die Ausgangssignale der Beschleunigungssensoren ein- oder zweimal zu integrieren.

Die DE 100 35 505 A1 offenbart ein Verfahren, bei dem mit Hilfe des neuronalen Netzes das Ausgangssignal eines Beschleunigungssensors in seinem zukünftigen zeitlichen Verlauf auf der Basis der Beschleunigungssensorsignale zu mindest einem definierten Zeitpunkt vorhergesagt wird.

Aus der DE 100 40 111 A1 ist ein Verfahren zur Bildung einer Auslöseentscheidung für Rückhaltemittel in einem Fahrzeug bekannt, bei dem aus Beschleunigungsmesswerten die Differenz gebildet und anschließend der Betrag der Differenz integriert wird. Das Integral wird mit mindestens einem Schwellwert verglichen. Überschreitet das Integral diesen Schwellwert bis zu einem vorgegebenen Zeitpunkt nicht, so wird die Lage einer Auslöseschwelle für die gemessene Beschleunigung oder für eine daraus abgeleitete Geschwindigkeitsänderung so verändert, dass die Auslöseempfindlichkeit geringer wird.

In der DE 101 03 661 C1 ist ein Verfahren zur Seitenaufprallsensierung in einem Kraftfahrzeug beschrieben, wobei auf der linken und auf der rechten Fahrzeugseite Beschleunigungssensoren angeordnet sind, aus deren Ausgangssignalen die Differenz gebildet wird. Das Differenzbeschleunigungssignal wird integriert oder aufsummiert. Zur Seitenaufprallsensierung wird das Differenzgeschwindigkeitssignal mit einer Schwelle verglichen, die in Abhängigkeit von dem Differenzbeschleunigungssignal gebildet wird.

Die US 2002/0147533 A1 offenbart eine Vorrichtung zum Steuern eines Fahrzeuginsassenrückhaltesystems mit einem ersten Zusammenstossbeschleunigungsmesser bzw. -sensor, der eine Zusammenstossbeschleunigung misst und ein entsprechendes anzeigendes erstes Zusammenstossbeschleunigungssignal liefert, mit einem Mittel zum Bestimmen der Zusammenstossgeschwindigkeit aus dem ersten Zusammenstossbeschleunigungssignal, mit einem Mittel zum Bestimmen einer Zusammenstossverschiebung aus dem ersten Zusammenstossbeschleunigungssignal, mit einer Steuerung zum Vergleichen der Zusammenstossgeschwindigkeit als eine Funktion der Zusammenstossverschiebung mit entweder einem ausgewählten Unterscheidungsschwellenwert oder einem geschalteten Unterscheidungsschwellenwert, und mit einem zweiten Beschleunigungsmesser, der eine Zusammenstossquerbeschleunigung misst und ein entsprechendes Zusammenstossquerbeschleunigungssignal liefert, wobei die Steuerung Mittel zum Vergleichen eines Wertes umfasst, der in funktionaler Beziehung zur Zusammenstossquerbeschleunigung steht als eine Funktion bestimmter Zusammenstossverschiebungen, mit einem Querschwellenwert.

Es ist Aufgabe der Erfindung, ein Verfahren zum Herstellen eines verbesserten Kraftfahrzeuges, insbesondere ein Verfahren zum Herstellen eines Kraftfahrzeuges mit einem verbesserten Insassenschutzsystem, anzugeben. Dabei ist es besonders wünschenswert, eine besonders präzise Auslösung eines solchen Insassenschutzsystems für ein Kraftfahrzeug zu gewährleisten.

Vorgenannte Aufgabe wird durch ein Verfahren zum Herstellen eines Kraftfahrzeuges gelöst, wobei zumindest ein Crashsensor zum Messen einer Bewegungsgröße des Kraftfahrzeuges, ein Steuergerät zur Ermittlung eines Zündsignals in Abhängigkeit eines Vergleichs der Bewegungsgröße mit zumindest einem Grenzwert und eine mittels des Zündsignals steuerbare Insassenschutzeinrichtung in dem Kraftfahrzeug angeordnet (und insbesondere miteinander datentechnisch verbunden) werden, und wobei der Grenzwert automatisch ermittelt wird.

Eine Bewegungsgröße des Kraftfahrzeuges im Sinne der Erfindung kann eine Beschleunigung, eine Geschwindigkeit oder ein Weg bzw. eine von diesen Größen abgeleitete Größe sein.

Ein Crashsensor im Sinne der Erfindung kann ein Beschleunigungssensor zum Messen einer Beschleunigung in eine oder mehrere Richtungen sein. Ein Crashsensor im Sinne der Erfindung kann auch ein Radargerät, eine Infrarotanordnung oder eine Kamera sein. In diesem Fall kann eine Bewegungsgröße des Kraftfahrzeuges ein Abstand des Kraftfahrzeuges zu einem Hindernis, die erste oder zweite Ableitung dieses Abstandes oder eine andere äquivalente Größe sein. Ein Crashsensor im Sinne der Erfindung kann auch ein Sensor zur Messung einer Deformation des Kraftfahrzeuges sein. Ein solcher Sensor kann ein faseroptischer Sensor oder ein in der DE 100 16 142 A1 offenbarter Sensor sein. In diesem Falle kann eine Bewegungsgröße des Kraftfahrzeuges eine Deformation des Kraftfahrzeuges, die erste oder zweite Ableitung dieser Deformation oder eine andere äquivalente Größe sein.

Ein Zündsignal im Sinne der Erfindung kann ein binäres Signal sein, das angibt, ob eine Insassenschutzeinrichtung, wie ein Airbag und/oder ein Gurtstraffer, ausgelöst werden soll. Ein solches Zündsignal im Sinne der Erfindung kann ein in der DE 100 35 505 A1 beschriebenes "FIRE/NO-FIRE"-Signal sein. Ein Zündsignal im Sinne der Erfindung kann auch ein komplexeres Signal sein, das angibt, in welchem Ausmaß (z.B. Stufe 1 oder Stufe 2) ein Airbag gezündet werden soll. Ein solches Zündsignal im Sinne der Erfindung kann zudem ein in der DE 100 35 505 A1 beschriebener Crashschwereparameter bzw. eine Insassenbeschleunigung bzw. -belastung sein. Ein Zündsignal im Sinne der Erfindung kann eine den Ort und/oder die Richtung eines Zusammenstoßes angebende Information sein oder umfassen.

Eine Insassenschutzeinrichtung im Sinne der Erfindung ist insbesondere ein Airbag und/oder ein Gurtstraffer.

Vorgenannte Aufgabe wird zudem durch ein Verfahren zum Herstellen eines Kraftfahrzeuges gelöst, wobei zumindest ein Crashsensor zum Messen einer Bewegungsgröße des Kraftfahrzeuges, ein Steuergerät zur Ermittlung eines Zündsignals in Abhängigkeit einer Mehrzahl von Vergleichen der Bewegungsgröße mit einer Mehrzahl von Grenzwerten und eine mittels des Zündsignals steuerbare Insassenschutzeinrichtung in dem Kraftfahrzeug angeordnet (und insbesondere miteinander datentechnisch verbunden) werden, und wobei die Grenzwerte, die Anzahl der Vergleiche, die Reihenfolge der Vergleiche und/oder das Alter der Bewegungsgrößen für die Vergleiche automatisch ermittelt werden.

In vorteilhafter Ausgestaltung der Erfindung werden zumindest zwei Crashsensoren je zum Messen zumindest einer Bewegungsgröße in dem Kraftfahrzeug angeordnet, wobei die gemessenen Bewegungsgrößen für die Vergleiche automatisch ausgewählt werden. Vorgenannte Aufgabe wird zudem durch ein - insbesondere eines oder mehre der vorgenannten Merkmale umfassendes - Verfahren zum Herstellen eines Kraftfahrzeuges gelöst, wobei zumindest zwei Crashsensoren je zum Messen zumindest einer Bewegungsgröße des Kraftfahrzeuges, ein Steuergerät zur Ermittlung eines Zündsignals in Abhängigkeit einer Mehrzahl von Vergleichen der Bewegungsgröße mit einer Mehrzahl von Grenzwerten und eine mittels des Zündsignals steuerbare Insassenschutzeinrichtung in dem Kraftfahrzeug angeordnet (und insbesondere miteinander datentechnisch verbunden) werden, und wobei die Grenzwerte automatisch ermittelt werden, die Anzahl der Vergleiche automatisch festgelegt wird, die Reihenfolge der Vergleiche automatisch ausgewählt wird, eine gemessene Bewegungsgröße für einen Vergleich automatisch ausgewählt wird und/oder das Alter der Bewegungsgrößen für die Vergleiche automatisch ausgewählt wird.

In vorteilhafter Ausgestaltung der Erfindung ist vorgesehen, dass die Grenzwerte mittels eines Verfahrens zur automatischen Generierung von Entscheidungsbäumen ermittelt werden, die Anzahl der Vergleiche mittels eines Verfahrens zur automatischen Generierung von Entscheidungsbäumen festgelegt wird, die Reihenfolge der Vergleiche mittels eines Verfahrens zur automatischen Generierung von Entscheidungsbäumen ausgewählt wird, eine gemessene Bewegungsgröße für einen Vergleich mittels eines Verfahrens zur automatischen Generierung von Entscheidungsbäumen ausgewählt wird und/oder das Alter der Bewegungsgrößen für die Vergleiche mittels eines Verfahrens zur automatischen Generierung von Entscheidungsbäumen ausgewählt wird.

Geeignete Verfahren, mittels derer die Grenzwerte ermittelt werden können, mittels derer die Anzahl der Vergleiche festgelegt werden kann, mittels derer die Reihenfolge der Vergleiche ausgewählt werden kann, mittels derer eine gemessene Bewegungsgröße für einen Vergleich ausgewählt werden kann und/oder mittels derer das Alter der Bewegungsgrößen für die Vergleiche ausgewählt werden kann sind z.B. in dem offenbarten Buch "INTRODUCTION TO MACHINE LEARNING - AN EARLY DRAFT OF A PROPOSED TEXTBOOK", Nilsson, N. J., September 26, 1996 sowie dem Buch "Machine Learning", 1986, ISSN:0885-6125, Kluwer Academic Publishers Kapitel "Induction of Decision Trees" von Quinlan, R., Seiten 81 bis 106 offenbart.

Geeignet ist auch die Routine "treefit" aus der "Statistics Toolbox" des Programms "MATLAB 7" von Mathworks. Dieses Programm kann erworben werden. Einzelheiten zur Routine "treefit" sind offenbart.

In weiterhin vorteilhafter Ausgestaltung der Erfindung werden zumindest zwei Crashsensoren in einem Abstand von mehr als 0,5 m voneinander angeordnet.

In weiterhin vorteilhafter Ausgestaltung der Erfindung wird ein zeitlicher Mittelwert der mittels des Crashsensors gemessenen Bewegungsgröße über zumindest ein erstes Zeitintervall und vorteilhafterweise ein zeitlicher Mittelwert der mittels des Crashsensors gemessenen Bewegungsgröße über ein zweites, von dem ersten Zeitintervall verschiedenes, Zeitintervall als Bewegungsgröße verwendet.

Ein Mittelwert im Sinne der Erfindung kann ein arithmetischer Mittelwert oder ein gewichteter Mittelwert sein. Bei einem derartigen gewichteten Mittelwert können z.B. jüngere Werte der Bewegungsgröße in dem betreffenden Zeitintervall stärker gewichtet werden als ältere Werte der Bewegungsgröße in dem betreffenden Zeitintervall. Ein Mittelwert im Sinne der Erfindung kann auch ein einem Mittelwert proportionaler Wert sein. In vorteilhafter Ausgestaltung der Erfindung ist der Mittelwert ein dem arithmetischen Mittelwert proportionaler Wert. Dabei ist der Mittelwert vorteilhafterweise ein dem Integral der Bewegungsgröße in dem betreffenden Zeitintervall bzw. der Summe von Abtastwerten der Bewegungsgröße in dem betreffenden Zeitintervall proportionaler Wert.

Ein zweites, von einem ersten Zeitintervall verschiedenes, Zeitintervall im Sinne der Erfindung kann sich von dem ersten Zeitintervall in seiner Länge und/oder seiner Lage unterscheiden.

In weiterhin vorteilhafter Ausgestaltung der Erfindung wird das Zündsignal (mittels des Steuergerätes) in Abhängigkeit zeitlicher Mittelwerte der mittels des Crashsensors gemessenen Bewegungsgröße in zwei bis zwanzig, vorteilhafterweise in zwei bis zehn, unterschiedlichen Zeitintervallen ermittelt. In weiterhin vorteilhafter Ausgestaltung der Erfindung wird das Zündsignal (mittels des Steuergerätes) in Abhängigkeit zeitlicher Mittelwerte der mittels des Crashsensors gemessenen Bewegungsgröße in zwei bis fünf unterschiedlichen Zeitintervallen ermittelt. Unterschiedliche Zeitintervalle im Sinne der Erfindung können sich in der Länge und/oder in der Lage voneinander unterscheiden.

In weiterhin vorteilhafter Ausgestaltung der Erfindung sind die Zeitintervalle zwischen 1 ms und 200 ms, insbesondere zwischen 4 ms und 32 ms, vorteilhafterweise zwischen 8 ms und 24 ms, lang.

In weiterhin vorteilhafter Ausgestaltung der Erfindung sind zumindest zwei, insbesondere benachbarte, Zeitintervalle zwischen 1 ms und 50 ms, vorteilhafterweise 2 ms und 16 ms, versetzt. In weiterhin vorteilhafter Ausgestaltung der Erfindung sind alle benachbarten Zeitintervalle je zwischen 1 ms und 50 ms, vorteilhafterweise 2 ms und 16 ms, voneinander versetzt.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen, wobei gleiche Bezugszeichen gleiche oder gleichartige Gegenstände bezeichnen. Dabei zeigen:

Fig. 1     eine Draufsicht auf ein Kraftfahrzeug,

Fig. 2     ein Ausführungsbeispiel für ein Insassenschutzsystem,

Fig. 3     ein Ausführungsbeispiel eines Steuerungsmoduls,

Fig. 4     ein Ausführungsbeispiel eines Auslösemoduls,

Fig. 5     ein Ausführungsbeispiel eines Ausgangssignals eines Crashsensors,

Fig. 6     das Integral des Ausgangssignals gemäß Fig. 5 in einem Zeitintervall,

Fig. 7     ein Ausführungsbeispiel eines Entscheidungsbaumes,

Fig. 8     ein Ausführungsbeispiel eines Verfahrens zum Herstellen eines Kraftfahrzeuges,

Fig. 9     ein Ausführungsbeispiel eines Lernverfahrens,

Fig. 10    ein weiteres Ausführungsbeispiel eines Auslösemoduls,

Fig. 11    ein weiteres Ausführungsbeispiel eines Auslösemoduls und

Fig. 12    ein weiteres Ausführungsbeispiel eines Auslösemoduls.

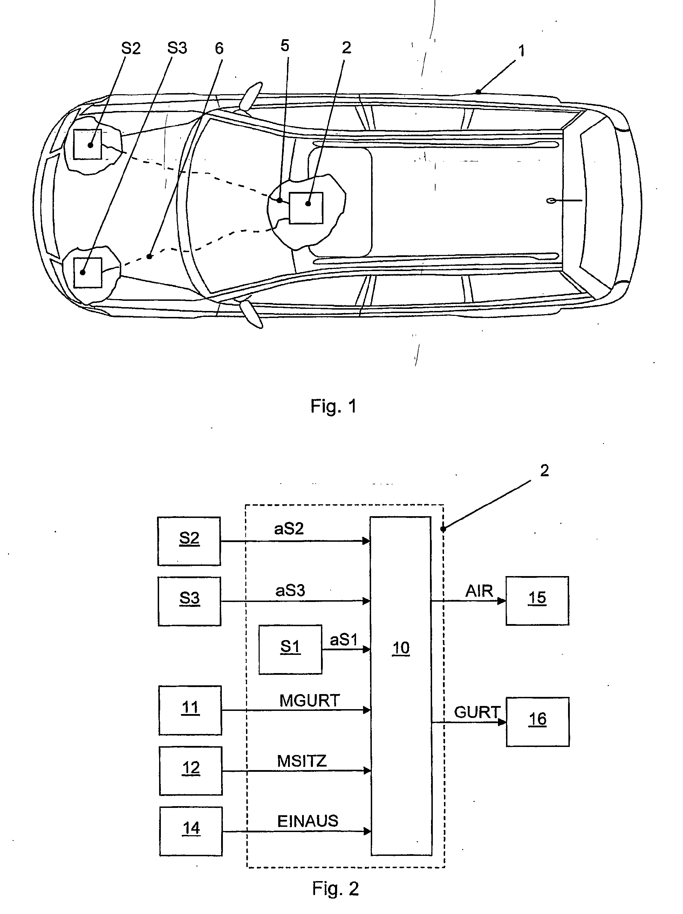

Fig. 1 zeigt eine Draufsicht auf ein Kraftfahrzeug 1 mit einem - in Fig. 2 in Form eines Blockschaltbildes dargestellten - Insassenschutzsystem. Das Insassenschutzsystem umfasst zumindest einen - nicht in Fig. 1 jedoch in Fig. 2 dargestellten - Airbag 15 und/oder einen-nicht in Fig. 1 jedoch in Fig. 2 dargestellten - Gurtstraffer 16. Das Insassenschutzsystem umfasst zudem ein Steuergerät 2 zum Auslösen des Airbags 15 und/oder des Gurtstraffers 16 sowie einen in die rechte vordere Seite des Kraftfahrzeuges 1 integrierten Crashsensor S2 und einen in die linke vordere Seite des Kraftfahrzeuges 1 integrierten Crashsensor S3. Die Crashsensoren S2 und S3 sind mit dem Steuergerät 2 durch Zuleitungen 5 und 6 verbunden.

Die Crashsensoren S2 und S3 sowie ein weiterer - wie in Fig. 2 dargestellt in das Steuergerät 2 integrierter - Crashsensor S1 sind gemäß dem vorliegenden Ausführungsbeispiel als Beschleunigungssensoren ausgebildet. Geeignete Beschleunigungssensoren sind z.B. in dem

veröffentlichten Artikel XP0023 12 399 "Hardware und Mechanik realer Airbagsteuerungen", Kapitel 3.2 ‚Beschleunigungssensor' offenbart. Geeignete Beschleunigungssensoren sind z.B. Bosch SMB060, Bosch PAS3 oder Bosch UPF1. Ein geeigneter Beschleunigungssensor kann z.B. einen Bessel-Tiefpassfilter mit einer Grenzfrequenz von z.B. 400 Hz umfassen. Die Crashsensoren S1, S2 und S3 liefern als Ausgangssignale Beschleunigungswerte aS1, aS2 bzw. aS3.

Das Insassenschutzsystem umfasst zudem einen Gurtsensor 11 zum Erkennen, ob ein Sicherheitsgut angelegt ist, und zur Ausgabe einer entsprechenden Gurtinformation MGURT. Das Insassenschutzsystem umfasst weiterhin einen Sitzbelegungssensor 12 zum Erkennen, ob bzw. wie ein Sitz belegt ist, und zur Ausgabe einer entsprechenden Sitzbelegungsinformation MSITZ. Ein geeigneter Sitzbelegungssensor ist z.B. ein in den Sitz integrierter Drucksensor. Geeignet ist auch eine in dem

veröffentlichten Artikel XP0023 12 399 "Hardware und Mechanik realer Airbagsteuerungen", Kapitel 3.3 ‚Innenraum Sensierung' offenbarte Infrarotabtastung. Mittels Infrarotabtastung und Fuzzy Logic lässt sich dabei nicht nur erkennen, ob ein Sitz belegt ist, sondern auch, ob es sich dabei um einen Gegenstand wie eine Tasche handelt oder um einen Menschen. Dazu sendet eine Zeile von z.B. acht oder mehr Leuchtdioden oberhalb des Sitzes Infrarotlicht aus und eine CCD-Matrix aus 64 Bildpunkten nimmt die so beleuchtete Szene auf. Diese charged coupled devices, kurz CCD, bestehen aus Photodioden und Verstärkerelementen in Matrixanordnungen. Einfallendes Licht setzt dabei jeweils Ladungsträger frei. Ein so erzeugtes Signal wird verstärkt und verarbeitet beziehungsweise gespeichert. Dieser Vorgang wird unter verschiedenen Winkeln wiederholt und so der Sitz abgetastet. Algorithmen der Bildverarbeitung und der Fuzzy Logic erkennen aus diesen Signalen Konturen von Objekten und Menschen.

Es kann weiterhin vorgesehen sein, dass das Insassenschutzsystem ein Bedienelement 14 zur Aktivierung bzw. Deaktivierung des Airbags 15 umfasst. Ein entsprechendes Schaltsignal ist mit Bezugszeichen EINAUS bezeichnet.

Das Steuergerät 2 umfasst ein Steuerungsmodul 10 zur Berechnung und Ausgabe eines Zündsignals AIR für den Airbag 15 und/oder eines Zündsignals GURT für den Gurtstraffer 16 in Abhängigkeit der Beschleunigungswerte aS1, aS2 bzw. aS3, der Gurtinformation MGURT, der Sitzbelegungsinformation MSITZ und/oder des Schaltsignals EINAUS.

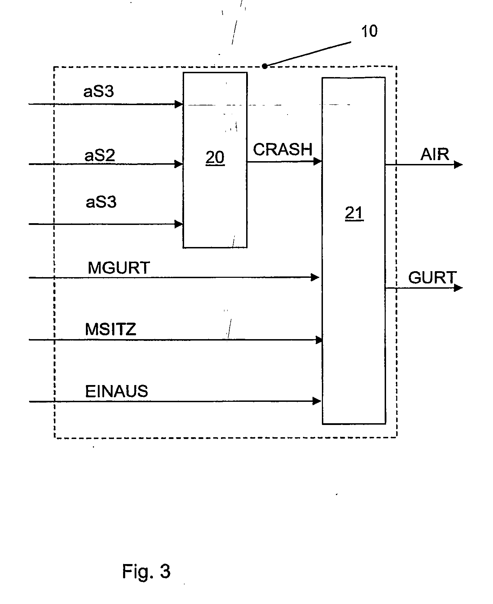

Fig. 3 zeigt das Steuerungsmodul 10 in einer beispielhaften Ausgestaltung. Das Steuerungsmodul 10 umfasst ein Auslösemodul 20 zur Berechnung und Ausgabe eines Zündvorschlags CRASH in Abhängigkeit der Beschleunigungswerte aS1, aS2 bzw. aS3. Das Steuerungsmodul 10 umfasst zudem eine Feuertabelle 21 zur Berechnung und Ausgabe des Zündsignals AIR für den Airbag 15 und/oder des Zündsignals GURT für den Gurtstraffer 16 in Abhängigkeit des Zündvorschlags CRASH, der Gurtinformation MGURT, der Sitzbelegungsinformation MSITZ und/oder des Schaltsignals EINAUS. So kann z.B. vorgesehen werden, dass das Zündsignal AIR nur dann gleich dem Zündvorschlag CRASH ist, wenn ein entsprechender Sitz mit einer Person einer gewissen Größe belegt ist, und dass das Zündsignal AIR andernfalls gleich 0 ist.

Sowohl der Zündvorschlag CRASH als auch die Zündsignale AIR und GURT können Zündsignale im Sinne der Ansprüche sein. Sowohl der Zündvorschlag CRASH als auch die Zündsignale AIR und GURT können ein -z.B. dem in der DE 100 35 505 A1 beschriebenen "FIRE/NO-FIRE"-Signal entsprechendes - binäres Signal sein, das angibt, ob eine Insassenschutzeinrichtung, wie ein Airbag und/oder ein Gurtstraffer, ausgelöst werden soll. Sowohl der Zündvorschlag CRASH als auch die Zündsignale AIR und GURT können auch ein komplexeres Signal sein. Sowohl der Zündvorschlag CRASH als auch das Zündsignal AIR können z.B. ein komplexeres Signal sein, das angibt, in welchem Ausmaß (z.B. Stufe 1 oder Stufe 2) der Airbag 15 gezündet werden soll. Sowohl der Zündvorschlag CRASH als auch das Zündsignal AIR können z.B. zudem ein in der DE 100 35 505 A1 beschriebener Crashschwereparameter bzw. eine Insassenbeschleunigung bzw. -belastung bzw. eine zu erwartende Insassenbeschleunigung bzw. -belastung umfassen. Es kann vorgesehen sein, dass sowohl der Zündvorschlag CRASH als auch die Zündsignale AIR und GURT den Ort und/oder die Richtung eines Zusammenstoßes angeben können.

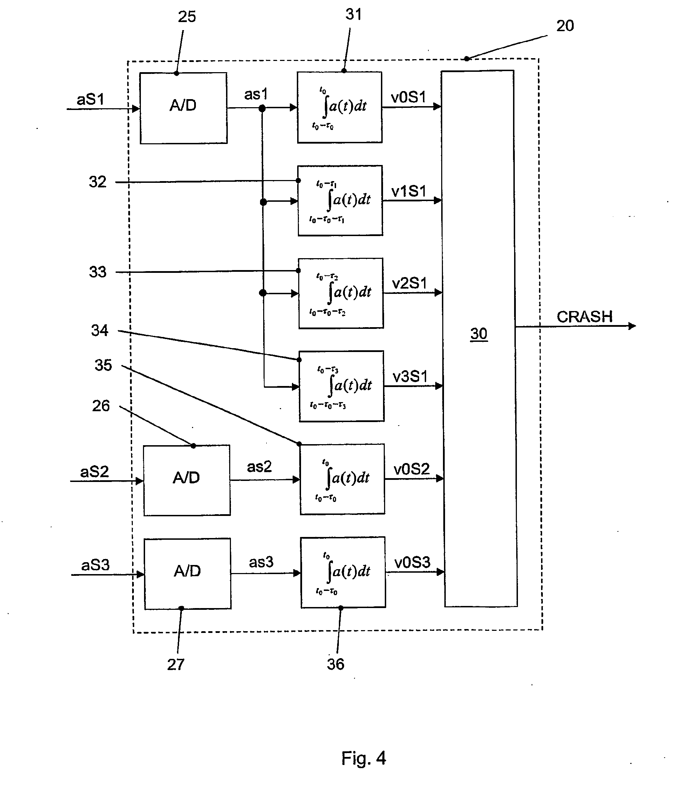

Fig. 4 zeigt das Auslösemodul 20 in einer beispielhaften Ausgestaltung. Das Auslösemodul 20 umfasst einen A/D-Wandler 25 (analog/digtal-Wandler) zum Abtasten des Beschleunigungswertes aS1 und zur Ausgabe eines abgetasteten Beschleunigungswertes as1, einen A/D-Wandler 26 zum Abtasten des Beschleunigungswertes aS2 und zur Ausgabe eines abgetasteten Beschleunigungswertes as2 und einen A/D-Wandler 27 zum Abtasten des Beschleunigungswertes aS3 und zur Ausgabe eines abgetasteten Beschleunigungswertes as3. Die Abtastfrequenz der $\Delta$t der A/D-Wandler 25, 26 und 27 kann z.B. 4 kHz betragen. Das Auslösemodul 20 umfasst zudem (digitale) Integratoren 31, 32, 33, 34, 35 und 36.

Mittels des Integrators 31 wird ein Pseudogeschwindigkeitswert v0S1 zu einem Zeitpunkt $t_0$ gemäß

$$v0S1 = \int_{t_0-\tau_0}^{t_0} as1 \cdot dt$$

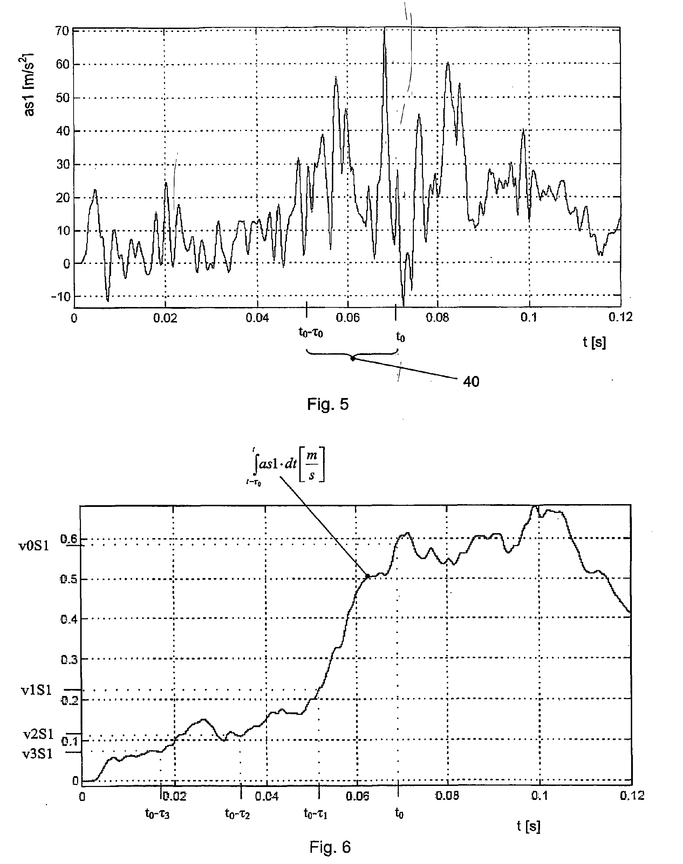

ermittelt, wobei $\tau_0$ die Länge eines Zeitintervalls $[t_0-\tau_0, t_0]$ bzw. 40 (vgl. Fig. 5) ist. Der Zeitpunkt $t_0$ bezeichnet den aktuellen Zeitpunkt, also den aktuellen Wert der Zeit t.

Mittels des Integrators 32 wird ein Pseudogeschwindigkeitswert v1S1 zu einem Zeitpunkt $t_0-\tau_1$ gemäß

$$v1S1 = \int_{t_0-\tau_0-\tau_1}^{t_0-\tau_1} as1 \cdot dt$$

ermittelt.

Mittels des Integrators 33 wird ein Pseudogeschwindigkeitswert v2S1 zu einem Zeitpunkt $t_0$-$\tau_2$ gemäß

$$v2S1 = \int_{t_0-\tau_0-\tau_2}^{t_0-\tau_2} as1 \cdot dt$$

ermittelt.

Mittels des Integrators 34 wird ein Pseudogeschwindigkeitswert v3S1 zu einem Zeitpunkt $t_0$-$\tau_3$ gemäß

$$v3S1 = \int_{t_0-\tau_0-\tau_3}^{t_0-\tau_3} as1 \cdot dt$$

ermittelt.

Mittels des Integrators 35 wird ein Pseudogeschwindigkeitswert vOS2 zum Zeitpunkt $t_0$ gemäß

$$v0S2 = \int_{t_0-\tau_0}^{t_0} as2 \cdot dt$$

ermittelt.

Mittels des Integrators 36 wird ein Pseudogeschwindigkeitswert v0S3 zum Zeitpunkt $t_0$ gemäß

$$v0S3 = \int_{t_0-\tau_0}^{t_0} as3 \cdot dt$$

ermittelt.

Die Wirkung der Integratoren 31, 32, 33, 34, 35 und 36 verdeutlichen Fig. 5 und Fig. 6. Dabei zeigt Fig. 5 einen beispielhaften Verlauf des (abgetasteten) Beschleunigungswertes as1 über die Zeit t bei einem Frontalzusammenstoß des Kraftfahrzeuges 1 mit einem Hindernis. Fig. 6 zeigt einen beispielhaften Verlauf des Pseudogeschwindigkeitswertes v0S1 für $\tau_0$ = 24ms.

## Tabelle 1

```
/* Evaluation function */
int evaluate_Action(double *x)
{
        int CRASH;

        if (vOS3 < δ_vOS3 ) {
                if (vOS2 < δ_vOS2 ) {
                        if (v2S1 < δ_v2S1 ) {
                                if (vOS1 < δ_vOS1 ) {
                                        CRASH = 0;
                                } else {
                                        if (vOS3 < δ_vOS3,2 ) {
                                                CRASH = 0;
                                        } else {
                                                if (vOS1 < δ_vOS1,2 ) {
                                                        if (v1S1 < δ_v1S1 ) {
                                                                CRASH = 1;
                                                        } else {
                                                                CRASH = 0;
                                                        }
                                                } else {
                                                        CRASH = 1;
                                                }
                                        }
                                }
                        } else {
                                if (vOS2 < δ_vOS2,2 ) {
                                        CRASH = 0;
                                } else {
                                        if (vOS3 < δ_vOS3,3 ) {
                                                CRASH = 0;
                                        } else {
                                                CRASH = 1;
                                        }
                                }
                        }
                } else {
                        CRASH = 1;
                }
        } else {
                CRASH = 1;
        }
        return (CRASH);
}
```

In der in Fig. 6 dargestellten beispielhaften Ausgestaltung beträgt $\tau_1$ 17 ms, $\tau_2$ 34 ms und $\tau_3$ 51 ms. In einer vorteilhaften Ausgestaltung kann $\tau_1$ 8 ms, $\tau_2$ 16 ms und $\tau_3$ 24 ms betragen. Die Pseudogeschwindigkeitswerte v0S1, v1S1, v2S1, v3S1, v0S2 und v0S3 sind Beispiele für zeitliche Mittelwerte im Sinne der Erfindung.

Das Auslösemodul 20 umfasst weiterhin eine Auslöseerzeugung 30 zur Erzeugung des Zündvorschlags CRASH. Die Auslöseerzeugung 30 ist als Abfolge von Vergleichen mit Grenzwerten ausgestaltet. Tabelle 1 zeigt eine solche Abfolge von Vergleichen mit Grenzwerten, wobei der in Tabelle 1 dargestellte Code durch ein Lernverfahren automatisch erzeugt worden ist. Für den in Tabelle 1 dargestellte Code beträgt $\tau_1$ 4 ms, $\tau_2$ 8 ms und $\tau_0$ 24 ms.

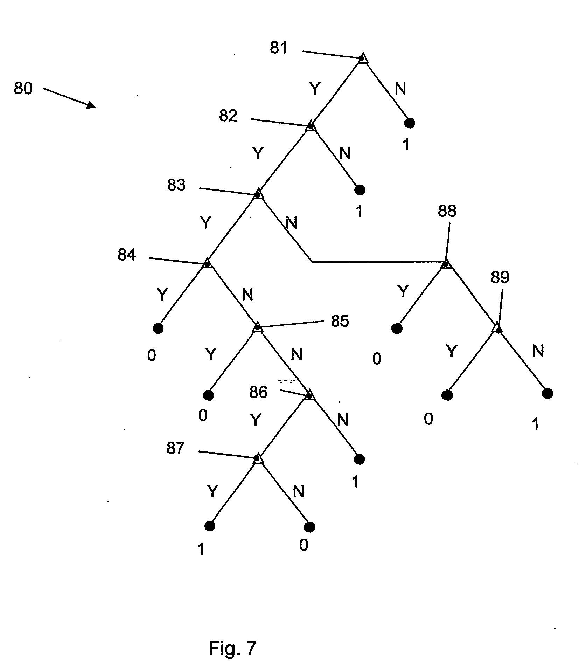

Fig. 7 zeigt den Code gemäß Tabelle 1 in einer Darstellung als Entscheidungsbaum 80. Dabei bezeichnet Bezugszeichen 81 die Abfrage, ob v0S3 kleiner ist als ein Grenzwert $\delta_{v0S3}$. Bezugszeichen 82 bezeichnet die Abfrage, ob v0S2 kleiner ist als ein Grenzwert $\delta_{v0S2}$. Bezugszeichen 83 bezeichnet die Abfrage, ob v2S1 kleiner ist als ein Grenzwert $\delta_{v2S1}$. Bezugszeichen 84 bezeichnet die Abfrage, ob v0S1 kleiner ist als ein Grenzwert $\delta_{v0S1}$. Bezugszeichen 85 bezeichnet die Abfrage, ob v0S3 kleiner ist als ein Grenzwert $\delta_{v0S3,2}$. Bezugszeichen 86 bezeichnet die Abfrage, ob v0S1 kleiner ist als ein Grenzwert $\delta_{v0S1,2}$. Bezugszeichen 87 bezeichnet die Abfrage, ob v1S1 kleiner ist als ein Grenzwert $\delta_{v1S1}$. Bezugszeichen 88 bezeichnet die Abfrage, ob v0S2 kleiner ist als ein Grenzwert $\delta_{v0S2,2}$. Bezugszeichen 89 bezeichnet die Abfrage, ob v0S3 kleiner ist als ein Grenzwert $\delta_{v0S3,3}$.

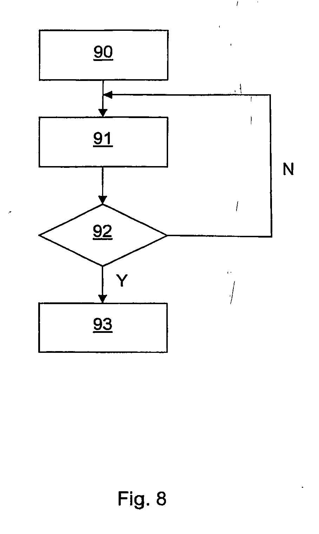

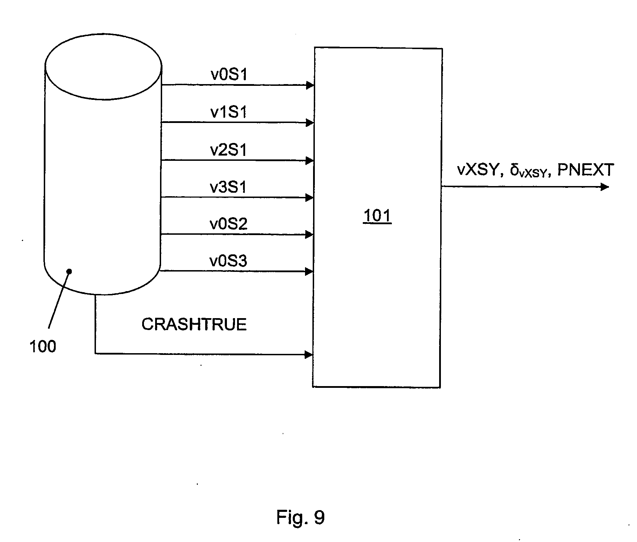

Fig. 8 zeigt ein Verfahren zum Herstellen des Kraftfahrzeuges 1. Dazu wird zunächst in einem Schritt 90 ein Test-Prototyp des Kraftfahrzeuges 1 erstellt, in den den Crashsensoren S1, S2, S3 entsprechende Crashsensoren zum Messen der Bewegungsgröße des Kraftfahrzeuges 1 eingebaut werden. Der Test-Prototyp des Kraftfahrzeuges 1 wird einem Crashtest unterzogen, wobei die Ausgangssignale der den Crashsensoren S1, S2, S3 entsprechenden Crashsensoren gemessen werden. Aus diesen Ausgangssignalen bzw. den Ausgangssignalen weiterer Crashtests wird eine in Fig. 9 mit Bezugszeichen 100 bezeichnete Datenbasis aufgebaut. In dieser Datenbasis 100 sind aus den vorgenannten Ausgangssignalen der den Crashsensoren S1, S2, S3 entsprechenden Crashsensoren gemäß einem in Fig. 4, Fig. 10, Fig. 11 bzw. Fig. 12 beschriebenen Verfahren erzeugte Pseudogeschwindigkeitswerte v0S1, v1S1, v2S1, v3S1, v0S2, v0S3 zusammen mit einer Auslöseinformation CRASHTRUE abgespeichert. Die Auslöseinformation CRASHTRUE kann z.B. einen Soll-Zündzeitpunkt eines Airbags angeben. Die Auslöseinformation CRASHTRUE kann z.B. -wie im vorliegenden Ausführungsbeispiel vorgesehen - vor einem Soll-Zündzeitpunkt eines Airbags 0 und nach dem Soll-Zündzeitpunkt des Airbags 1 sein.

Dem Schritt 90 folgt ein Schritt 91, in dem die Auslöseerzeugung 30 mittels eines unter Bezugnahme auf Fig. 9 beschriebenen Lernverfahrens erzeugt wird. Dazu wird ein Pseudogeschwindigkeitswert vXSY (für das vorliegende Ausführungsbeispiel: (X,Y) = (0,1), (1,1), (2,1), (3,1), (1,1), (2,1)) für einen Vergleich mit einem von einem Auslöseerzeugungs-Generierungsmodul 101 automatisch ermittelten Grenzwert $\delta_{vXSY}$ von dem Auslöseerzeugungs-Generierungsmodul 101 automatisch ausgewählt. Zudem wird eine Entscheidung PNEXT über einen weiteren Vergleich von dem Auslöseerzeugungs-Generierungsmodul 101 automatisch erzeugt. Mittels des Auslöseerzeugungs-Generierungsmoduls 101 wird somit der in Tabelle 1 dargestellte Code und somit die Auslöseerzeugung 30 automatisch generiert. Das Auslöseerzeugungs-Generierungsmodul 101 kann z.B. durch die Routine "treefit" aus der "Statistics Toolbox" des Programms "MATLAB 7" von Mathworks implementiert werden. Dieses Programm kann erworben werden. Einzelheiten zur Routine "treefit" sind offenbart.

Die Auslöseerzeugung 30 gemäß Fig. 7 bzw. Tabelle 1 lässt den Pseudogeschwindigkeitswert v3S1 unberücksichtigt. Dieser ist im Lernverfahren berücksichtigt, jedoch von dem Auslöseerzeugungs-Generierungsmodul 101 bei der Erzeugung des Codes gemäß Tabelle 1 verworfen worden.

Dem Schritt 91 folgt eine Abfrage 92, ob die so erzeugte Auslöseerzeugung 30 in Ordnung ist. Dazu wird sie mit den nicht im Schritt 91 verwendeten Einträgen der Datenbasis 100 getestet. Ist die Auslöseerzeugung 30 in Ordnung, so folgt der Abfrage 92 ein Schritt 93. Andernfalls wird der Schritt 91 unter veränderten Bedingungen wiederholt.

In dem Schritt 93 wird die Auslöseerzeugung 30 in dem Steuergerät 2 implementiert. Das Steuergerät 2 wird anschließend zusammen mit den Crashsensoren S1, S2, S3 und entsprechenden Insassenschutzeinrichtungen in dem Kraftfahrzeug 1 verbaut.

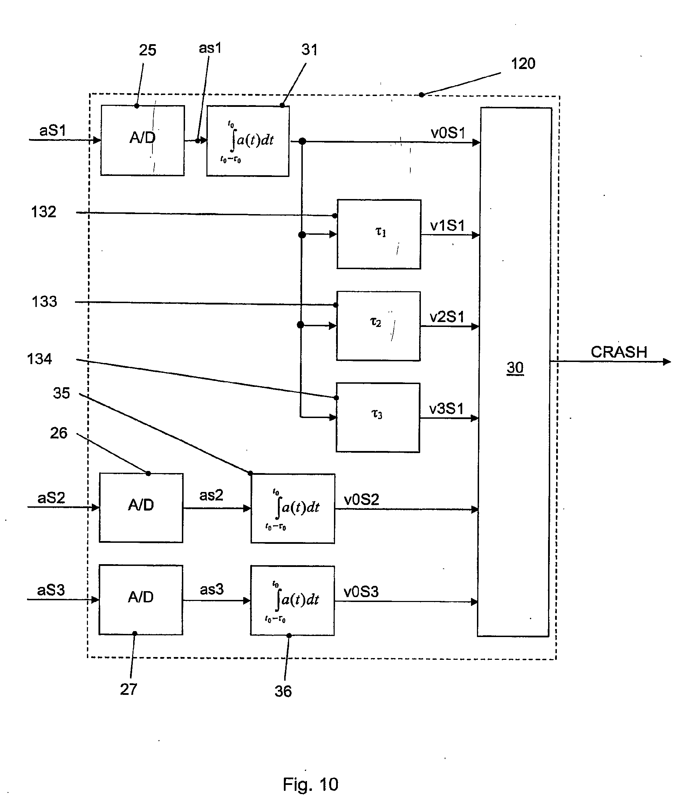

Fig. 10 zeigt ein zum Auslösemodul 20 alternatives Auslösemodul 120 in einer beispielhaften Ausgestaltung. Dabei sind die Integratoren 32, 33 und 34 durch Totzeitglieder 132, 133 und 134 ersetzt, die derart angeordnet sind, dass sich der Pseudogeschwindigkeitswert v1S1 als um die Zeit $\tau_1$ verzögerter Pseudogeschwindigkeitswert v0S1, der Pseudogeschwindigkeitswert v2S1 als um die Zeit $\tau_2$ verzögerter Pseudogeschwindigkeitswert v0S1 und der Pseudogeschwindigkeitswert v3S1 als um die Zeit $\tau_3$ verzögerter Pseudogeschwindigkeitswert v0S1 ergibt.

Eine mögliche (einfache) Implementierung des Integrators 31 (und entsprechend angepasst für die Integratoren 32, 33 und 34) ist z.B.

$$vS1(i) = c \cdot \Delta t \sum_{j=i-\frac{\tau_0}{\Delta t}}^{i} as1(j)$$

wobei i ein Laufindex zur Angabe des aktuellen Zeitpunktes $t_0$ und eine Konstante ist. Die Pseudogeschwindigkeitswerte v0S1, v1S1, v2S1 und v3S1 ergeben sich in diesem Fall z.B. gemäß folgender Zusammenhänge:

$$v0S1 = vS1(i)$$

$$v1S1 = vS1(i - \frac{\tau_1}{\Delta t})$$

$$v2S1 = vS1(i - \frac{\tau_2}{\Delta t})$$

und

$$v3S1 = vS1(i - \frac{\tau_3}{\Delta t})$$

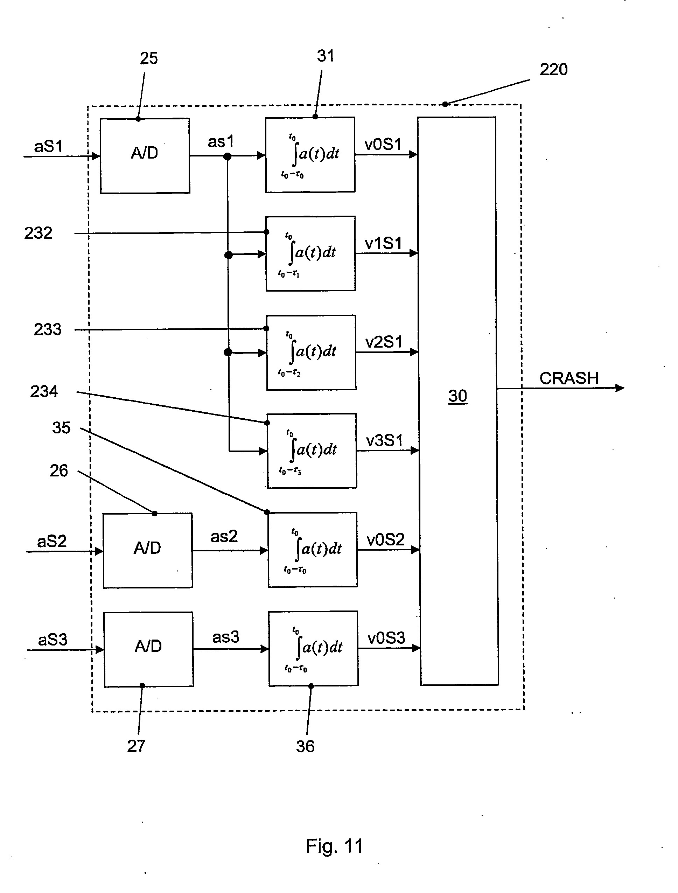

Fig. 11 zeigt ein zum Auslösemodul 20 alternatives Auslösemodul 220 in einer beispielhaften Ausgestaltung. Dabei sind die Integratoren 32, 33 und 34 durch Integratoren 232, 233 und 234 ersetzt. Dabei wird mittels des Integrators 232 der Pseudogeschwindigkeitswert v1S1gemäß

$$v1S1 = \int_{t_0 - \tau_1}^{t_0} as1 \cdot dt$$

ermittelt.
Mittels des Integrators 233 wird ein Pseudogeschwindigkeitswert v2S1 zu einem Zeitpunkt $t_0$ gemäß

$$v2S1 = \int_{t_0 - \tau_2}^{t_0} as1 \cdot dt$$

ermittelt.
Mittels des Integrators 234 wird ein Pseudogeschwindigkeitswert v3S1 zu einem Zeitpunkt $t_0$ gemäß

$$v3S1 = \int_{t_0 - \tau_3}^{t_0} as1 \cdot dt$$

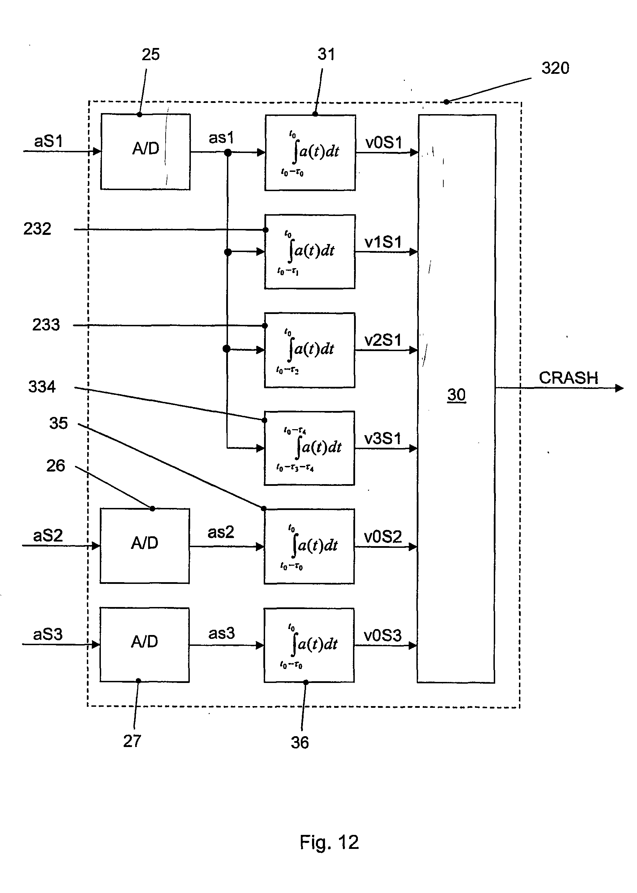

ermittelt.
Bei dem Auslösemodul 20 gemäß Fig. 4 und dem Auslösemodul 120 gemäß Fig. 10 unterscheiden sich die Zeitintervalle in ihrer Position. Bei dem Auslösemodul 220 gemäß Fig. 11 unterscheiden sich die Zeitintervalle dagegen in ihrer Länge. Es kann auch vorgesehen werden, dass sich Zeitintervalle in ihrer Länge und in ihrer Position unterscheiden. Ein entsprechendes Ausführungsbeispiel zeigt Fig. 12. Fig. 12 zeigt ein zum Auslösemodul 220 alternatives Auslösemodul 320 in einer beispielhaften Ausgestaltung. Dabei ist der Integrator 234 durch einen Integrator 334 ersetzt, mittels dessen ein Pseudogeschwindigkeitswert v3S1 zu einem Zeitpunkt $t_0-\tau_4$ gemäß

$$v3S1 = \int_{t_0 - \tau_3 - \tau_4}^{t_0 - \tau_4} as1 \cdot dt$$

ermittelt wird.

Die Erfindung führt zu einer besonders robusten Ansteuerung von Airbags und Gurtstraffern.

Obwohl in den Aufführungsbeispielen an Hand von Airbags und Gurtstraffern für einen Frontalzusammenstoß erläutert, soll die Erfindung selbstverständlich nicht auf diesen Fall beschränkt sein. Die Erfindung ist auch für Seitenairbags und andere Insassenschutzsysteme anwendbar. In einer Implementierung für Seitenairbags können die Crashsensoren S2 und S3 z.B. in der B-Säule angeordnet werden. Es kann vorgesehen werden, dass auch für Crashsensor S2 und/oder Crashsensor S3 zumindest ein Pseudogeschwindigkeitswert über zumindest einem weiteren Zeitintervall gebildet wird.

Ein Steuergerät im Sinne der Erfindung kann auch ein verteiltes System sein. Ein Steuergerät im Sinne der Erfindung muss nicht in einem einzigen Gehäuse untergebracht sein. Ein Steuergerät im Sinne der Erfindung kann auch ein einzelner Chip oder eine Platine sein.

Soweit Entscheidungsbäume im Zusammenhang mit der Erzeugung des Zündvorschlags CRASH genannt bzw. erwähnt sind, können diese auch durch Regression Trees, Association Tables, Rule Sets, Supervector Mashines oder andere Mashine-Learning-Verfahren ersetzt werden.

Anstelle der Bewegungsgrößen bzw. deren Mittelwerte können auch Differenzen von Bewegungsgrößen, Mittelwerte dieser Differenzen und/oder Differenzen von Mittelwerten verwendet werden. So kann z.B. vor den Integratoren 31, 32, 33, 34, 35, 36, 232, 233, 234 bzw. 334 in Fig. 4, Fig. 10, Fig. 11 und/oder Fig. 12 eine Differenzbildung vorgesehen werden, so dass anstelle der abgetasteten Beschleunigungswerte as1, as2, as3 Differenzwerte $\Delta$as1, $\Delta$as2, $\Delta$as3 Eingangsgrößen der Integratoren 31, 32, 33, 34, 35, 36, 232, 233, 234 bzw. 334 sind, wobei $\Delta$as1 gleich der Differenz as1-as2, $\Delta$as2 gleich der Differenz as1-as3 und $\Delta$as3 gleich der Differenz as2-as3 ist. Es kann zudem vorgesehen sein, dass der Differenzwert $\Delta$as1 in gleicher Weise verarbeitet wird wie der abgetastete Beschleunigungswert as1 in Fig. 4, Fig. 10, Fig. 11 und/oder Fig. 12, dass der Differenzwert $\Delta$as2 in gleicher Weise verarbeitet wird wie der abgetastete Beschleunigungswert as1 in Fig. 4, Fig. 10, Fig. 11 und/oder Fig. 12 und/oder dass der Differenzwert $\Delta$as3 in gleicher Weise verarbeitet wird wie der abgetastete Beschleunigungswert as2 in Fig. 4, Fig. 10, Fig. 11 und/oder Fig. 12. In diesem Fall sind die Anzahl der Integratoren und die Anzahl der Eingangsgrößen der Auslöseerzeugung 30 entsprechend anzupassen.

Differenzen können auch zeitliche Differenzen sein. So kann vorgesehen sein, anstelle der abgetasteten Beschleunigungswerte as1, as2, as3 Differenzwerte $\Delta$as1, $\Delta$as2, $\Delta$as3 als Eingangsgrößen der Integratoren 31, 32, 33, 34, 35, 36, 232, 233, 234 bzw. 334 zu verwenden, wobei $\Delta$as1(t) gleich der Differenz as1(t)-as1(t-$\tau$), $\Delta$as2 gleich der Differenz as2(t)-as2(t-$\tau$) oder der Differenz as2(t)-as3(t-$\tau$) und $\Delta$as3 gleich der Differenz as3(t)-as3(t-$\tau$) oder der Differenz as3(t)-as2(t-$\tau$) ist.

Entsprechend vorgenannten Ausführungen in Bezug auf eine Differenzbildung können Bewegungsgrößen im Sinne der Erfindung auch Differenzen von Bewegungsgrößen sein, wenn sie als Eingangsgrößen verwendet werden.

Analog kann mit den Pseudogeschwindigkeitswerten v0S1, v1S1, v2S1, v3S1, v0S2, v0S3 verfahren werden. Entsprechend können Mittelwerte von Bewegungsgrößen im Sinne der Erfindung auch Differenzen von Mittelwerten von Bewegungsgrößen bzw. Mittelwerte von Differenzen von Bewegungsgrößen sein, wenn sie als Eingangsgrößen verwendet werden.

**Bezugszeichenliste**

| 1 | Kraftfahrzeug |
|---|---|
| 2 | Steuergerät |
| 5, 6 | Zuleitungen |
| 10 | Steuerungsmodul |
| 11 | Gurtsensor |

| 12 | Sitzbelegungssensor |
| --- | --- |
| 14 | Bedienelement |
| 15 | Airbag |
| 16 | Gurtstraffer |
| 20, 120, 220, 320 | Auslösemodul |
| 21 | Feuertabelle |
| 25, 26, 27 | A/D-Wandler |
| 30 | Auslöseerzeugung |
| 31, 32, 33, 34, 35, 36, 232, 233, 234, 334 | Integrator |
| 40 | Zeitintervall |
| 80 | Entscheidungsbaum |
| 81, 82,83,84, 85, 86,87,88, 89, 92 | Abfrage |
| 90, 91, 93 | Schritt |
| 100 | Datenbasis |
| 101 | Auslöseerzeugungs-Generierungsmodul |
| 132, 133, 134 | Totzeitglied |
| AIR, GURT | Zündsignal |
| aS1, aS2, aS3, as1, as2, as3 | Beschleunigungswert |
| CRASH | Zündvorschlag |
| CRASHTRUE | Auslöseinformation |
| EINAUS | Schaltsignal |
| MGURT | Gurtinformation |
| MSITZ | Sitzbelegungsinformation |
| PNEXT | Entscheidung |
| S1, S2, S3 | Crashsensor |
| t | Zeit |
| $t_0$ | aktueller Zeitpunkt |
| v0S1, v1S1, v2S1, v3S1, v0S2, v0S3, vXSY | Pseudogeschwindigkeitswert |
| $\delta_{vXSY}$ | Grenzwert |

**EP 1 680 310 B1**

$\tau_0$, $\tau_1$, $\tau_2$, $\tau_3$                               Länge eines Zeitintervalls

**Patentansprüche**

1. Verfahren zum Herstellen eines Kraftfahrzeuges (1), wobei zumindest ein Crashsensor (S1) zum Messen einer Bewegungsgröße (aS1) des Kraftfahrzeuges (1), ein Steuergerät (2) zur Ermittlung eines Zündsignals (CRASH, AIR, GURT) in Abhängigkeit eines Vergleichs der Bewegungsgröße (aS1, v0S1) mit zumindest einem Grenzwert ($\delta_{v0S1}$) und eine mittels des Zündsignals (CRASH, AIR, GURT) steuerbare Insassenschutzeinrichtung (15, 16) in dem Kraftfahrzeug (1) angeordnet werden, und wobei der Grenzwert ($\delta_{v0S1}$) anhand eines Verfahrens zur automatischen Generierung Von Entscheidungsbäumen automatisch ermittelt wird.

2. Verfahren zum Herstellen eines Kraftfahrzeuges (1) nach Anspruch 1, wobei zumindest ein Crashsensor (S1) zum Messen einer Bewegungsgröße des Kraftfahrzeuges (1), ein Steuergerät (2) zur Ermittlung eines Zündsignals (CRASH, AIR, GURT) in Abhängigkeit einer Mehrzahl von Vergleichen der Bewegungsgröße (aS1, v0S1, v1S1, v2S1, v3S1) mit einer Mehrzahl von Grenzwerten ($\delta_{v0S1}$, $\delta_{v1S1}$, $\delta_{v2S1}$, $\delta_{v3S1}$) und eine mittels des Zündsignals (CRASH, AIR, GURT) steuerbare Insassenschutzeinrichtung (15, 16) in dem Kraftfahrzeug (1) angeordnet werden, und wobei die Grenzwerte ($\delta_{v0S1}$, $\delta_{v1S1}$, $\delta_{v2S1}$, $\delta_{v3S1}$), die Anzahl der Vergleiche, die Reihenfolge der Vergleiche oder das Alter der Bewegungsgrößen (v0S1, v1S1, v2S1, v3S1) für die Vergleiche automatisch ermittelt werden.

3. Verfahren nach Anspruch 2, **dadurch gekennzeichnet, dass** die Grenzwerte ($\delta_{v0S1}$, $\delta_{v1S1}$, $\delta_{v2S1}$, $\delta_{v3S1}$), die Anzahl der Vergleiche, die Reihenfolge der Vergleiche und das Alter der Bewegungsgrößen (v0S1, v1S1, v2S1, v3S1) für die Vergleiche automatisch ermittelt werden.

4. Verfahren nach Anspruch 1, 2 oder 3, **dadurch gekennzeichnet, dass** zumindest zwei (S1, S2) Crashsensoren je zum Messen zumindest einer Bewegungsgröße (aS1, aS2) in dem Kraftfahrzeug (1) angeordnet werden und dass die gemessenen Bewegungsgrößen (aS1, v0S1, v1S1, v2S1, v3S1, aS2, v0S1) für die Vergleiche automatisch ausgewählt werden.

5. Verfahren zum Herstellen eines Kraftfahrzeuges (1) nach Anspruch 1, 2 oder 3, wobei zumindest zwei Crashsensoren (S1, S2) je zum Messen zumindest einer Bewegungsgröße (as1, as2) des Kraftfahrzeuges (1), ein Steuergerät (2) zur Ermittlung eines Zündsignals (CRASH, AIR, GURT) in Abhängigkeit einer Mehrzahl von Vergleichen der Bewegungsgröße (as1, v0S1, v1S1, v2S1, v3S1, as2, v0S2) mit einer Mehrzahl von Grenzwerten ($\delta_{v0S1}$, $\delta_{v1S1}$, $\delta_{v2S1}$, $\delta_{v3S1}$, $\delta_{v0S2}$) und eine mittels des Zündsignals (CRASH, AIR, GURT) steuerbare Insassenschutzeinrichtung (15, 16) in dem Kraftfahrzeug (1) angeordnet werden, und wobei die Grenzwerte ($\delta_{v0S1}$, $\delta_{v1S1}$, $\delta_{v2S1}$, $\delta_{v3S1}$, $\delta_{v0S2}$) automatisch ermittelt werden, die Anzahl der Vergleiche automatisch festgelegt wird, die Reihenfolge der Vergleiche automatisch ausgewählt wird, eine gemessene Bewegungsgröße (v0S1, v1S1, v2S1, v3S1, v0S2) für einen Vergleich automatisch ausgewählt wird oder das Alter der Bewegungsgrößen (v0S1, v1S1, v2S1, v3S1, v0S2) für die Vergleiche automatisch ausgewählt wird.

6. Verfahren nach Anspruch 4 oder 5, **dadurch gekennzeichnet, dass** die Grenzwerte ($\delta_{v0S1}$, $\delta_{v1S1}$, $\delta_{v2S1}$, $\delta_{v3S1}$, $\delta_{v0S2}$) automatisch ermittelt werden, die Anzahl der Vergleiche automatisch festgelegt wird, die Reihenfolge der Vergleiche automatisch ausgewählt wird, eine gemessene Bewegungsgröße (v0S1, v1S1, v2S1, v3S1, v0S2) für einen Vergleich automatisch ausgewählt wird und das Alter der Bewegungsgrößen (v0S1, v1S1, v2S1, v3S1, v0S2) für die Vergleiche automatisch ausgewählt wird.

7. Verfahren nach einem der vorgehenden Ansprüche, **dadurch gekennzeichnet, dass** die Grenzwerte ($\delta_{v0S1}$, $\delta_{v1S1}$, $\delta_{v2S1}$, $\delta_{v3S1}$, $\delta_{v0S2}$) mittels eines Verfahrens zur automatischen Generierung von Entscheidungsbäumen (80) ermittelt werden, die Anzahl der Vergleiche mittels eines Verfahrens zur automatischen Generierung von Entscheidungsbäumen (80) festgelegt wird, die Reihenfolge der Vergleiche mittels eines Verfahrens zur automatischen Generierung von Entscheidungsbäumen (80) ausgewählt wird, eine gemessene Bewegungsgröße (v0S1, v1S1, v2S1, v3S1, v0S2) für einen Vergleich mittels eines Verfahrens zur automatischen Generierung von Entscheidungsbäumen (80) ausgewählt wird oder das Alter der Bewegungsgrößen (v0S1, v1S1, v2S1, v3S1, v0S2) für die Vergleiche mittels eines Verfahrens zur automatischen Generierung von Entscheidungsbäumen (80) ausgewählt wird.

8. Verfahren nach einem der vorhergehenden Ansprüche, **dadurch gekennzeichnet, dass** zumindest zwei Crashsensoren (S1, S2) in einem Abstand von mehr als 0,5 m voneinander angeordnet werden.

9.  Verfahren nach einem der vorgehenden Ansprüche, **dadurch gekennzeichnet, dass** ein zeitlicher Mittelwert (v0S1, v1S1, v2S1, v3S1, v0S2) der mittels des Crashsensors (S1) gemessenen Bewegungsgröße (as1, as2) über zumindest ein erstes Zeitintervall ($[t_0-\tau_0,t_0]$) als Bewegungsgröße verwendet wird.

**Claims**

1.  Method for producing a motor vehicle (1), wherein at least a crash sensor (S1) for measuring a movement variable (aS1) of the motor vehicle (1), a control device (2) for ascertaining an ignition signal (CRASH, AIR, BELT) in dependence on a comparison of the movement variable (aS1, v0S1) with at least one limit value ($\delta_{v0S1}$), and a passenger protection apparatus (15, 16), which is controllable using the ignition signal (CRASH, AIR, BELT), are arranged in the motor vehicle (1), and wherein the limit value ($\delta_{v0S1}$) is automatically ascertained on the basis of a method for automatically generating decision trees.

2.  Method for producing a motor vehicle (1) according to Claim 1, wherein at least a crash sensor (S1) for measuring a movement variable of the motor vehicle (1), a control device (2) for ascertaining an ignition signal (CRASH, AIR, BELT) in dependence on a plurality of comparisons of the movement variable (aS1, v0S1, v1S1, v2S1, v3S1) with a plurality of limit values ($\delta_{v0S1}$, $\delta_{v1S1}$, $\delta_{v2S1}$, $\delta_{v3S1}$), and a passenger protection apparatus (15, 16), which is controllable using the ignition signal (CRASH, AIR, BELT), are arranged in the motor vehicle (1), and wherein the limit values ($\delta_{v0S1}$, $\delta_{v1S1}$, $\delta_{v2S1}$, $\delta_{v3S1}$), the number of comparisons, the sequence of the comparisons or the age of the movement variables (v0S1, v1S1, v2S1, v3S1) for the comparisons are automatically ascertained.

3.  Method according to Claim 2, **characterized in that** the limit values ($\delta_{v0S1}$, $\delta_{v1S1}$, $\delta_{v2S1}$, $\delta_{v3S1}$), the number of comparisons, the sequence of the comparisons and the age of the movement variables (v0S1, v1S1, v2S1, v3S1) for the comparisons are automatically ascertained.

4.  Method according to Claim 1, 2 or 3, **characterized in that** at least two crash sensors (S1, S2) in each case for measuring at least one movement variable (aS1, aS2) are arranged in the motor vehicle (1) and **in that** the measured movement variables (aS1, v0S1, v1S1, v2S1, v3S1, aS2, v0S2) for the comparisons are automatically selected.

5.  Method for producing a motor vehicle (1) according to Claim 1, 2 or 3, wherein at least two crash sensors (S1, S2) in each case for measuring at least one movement variable (aS1, aS2) of the motor vehicle (1), a control device (2) for ascertaining an ignition signal (CRASH, AIR, BELT) in dependence on a plurality of comparisons of the movement variable (aS1, v0S1, v1S1, v2S1, v3S1, aS2, v0S2) with a plurality of limit values ($\delta_{v0S1}$, $\delta_{v1S1}$, $\delta_{v2S1}$, $\delta_{v3S1}$, $\delta_{v0S2}$), and a passenger protection apparatus (15, 16), which is controllable using the ignition signal (CRASH, AIR, BELT), are arranged in the motor vehicle (1), and wherein the limit values ($\delta_{v0S1}$, $\delta_{v1S1}$, $\delta_{v2S1}$, $\delta_{v3S1}$, $\delta_{v0S1}$) are automatically ascertained, the number of comparisons is automatically fixed, the sequence of the comparisons is automatically selected, a measured movement variable (v0S1, v1S1, v2S1, v3S1, v0S2) for a comparison is automatically selected or the age of the movement variables (v0S1, v1S1, v2S1, v3S1, v0S2) for the comparisons is automatically selected.

6.  Method according to Claim 4 or 5, **characterized in that** the limit values ($\delta_{v0S1}$, $\delta_{v1S1}$, $\delta_{v2S1}$, $\delta_{v3S1}$, $\delta_{v0S2}$) are automatically ascertained, the number of comparisons is automatically fixed, the sequence of the comparisons is automatically selected, a measured movement variable (v0S1, v1S1, v2S1, v3S1, v0S2) for a comparison is automatically selected and the age of the movement variables (v0S1, v1S1, v2S1, v3S1, v0S2) for the comparisons is automatically selected.

7.  Method according to one of the preceding claims, **characterized in that** the limit values ($\delta_{v0S1}$, $\delta_{v1S1}$, $\delta_{v2S1}$, $\delta_{v3S1}$, $\delta_{v0S2}$) are ascertained using a method for automatically generating decision trees (80), the number of comparisons is fixed using a method for automatically generating decision trees (80), the sequence of the comparisons is selected using a method for automatically generating decision trees (80), a measured movement variable (v0S1, v1S1, v2S1, v3S1, v0S2) for a comparison is selected or the age of the movement variables (v0S1, v1S1, v2S1, v3S1, v0S2) for a comparison is selected using a method for automatically generating decision trees (80), or the age of the movement variables (v0S1, v1S1, v2S1, v3S1, v0S2) for the comparisons is selected using a method for automatically generating decision trees (80).

8.  Method according to one of the preceding claims, **characterized in that** at least two crash sensors (S1, S2) are arranged at a distance of more than 0.5 m from each other.

9. Method according to one of the preceding claims, **characterized in that** a temporal average value (v0S1, v1S1, v2S1, v3S1, v0S2) of the movement variable (aS1, aS2) that is measured using the crash sensor (S1) over at least a first time interval ($[t_0-\tau_0, t_0]$) is used as a movement variable.

**Revendications**

1. Procédé de fabrication d'un véhicule automobile (1), dans lequel au moins un détecteur de collision (S1) pour mesurer une grandeur de mouvement (aS1) du véhicule automobile (1), on appareil de commande (2) pour déterminer un signal d'allumage (COLLISION, AIR, CEINTURE) en fonction d'une comparaison de la grandeur de mouvement (aS1, v0S1) avec au moins une valeur limite ($\delta_{v0S1}$) et un dispositif de protection d'occupant (15, 16) pouvant être commandé au moyen du signal d'allumage (COLLISION, AIR, CEINTURE) sont disposés dans le véhicule automobile (1), et dans lequel la valeur limite ($\delta_{v0S1}$) est déterminée automatiquement à l'aide d'un procédé pour générer automatiquement des arbres de décision.

2. Procédé de fabrication d'un véhicule automobile (1) selon la revendication 1, dans lequel au moins un détecteur de collision (S1) pour mesurer une grandeur de mouvement du véhicule automobile (1), un appareil de commande (2) pour déterminer un signal d'allumage (COLLISION, AIR, CEINTURE) en fonction d'une multiplicité de comparaisons de la grandeur de mouvement (aS1, v0S1, v1S1, v2S1, v3S1) avec une multiplicité de valeurs limites ($\delta_{v0S1}$, $\delta_{v1S1}$, $\delta_{v2S1}$, $\delta_{v3S1}$) et un dispositif de protection d'occupant (15, 16) pouvant être commandé au moyen du signal d'allumage (COLLISION, AIR, CEINTURE) sont disposés dans le véhicule automobile (1), et dans lequel les valeurs limites ($\delta_{v0S1}$, $\delta_{v1S1}$, $\delta_{v2S1}$, $\delta_{v3S1}$), le nombre des comparaisons, l'ordre des comparaisons ou l'âge des grandeurs de mouvement (v0S1, v1S1, v2S1, v3S1) pour les comparaisons sont déterminés automatiquement.

3. Procédé selon la revendication 2, **caractérisé en ce que** les valeurs limites ($\delta_{v0S1}$, $\delta_{v1S1}$, $\delta_{v2S1}$, $\delta_{v3S1}$), le nombre des comparaisons, l'ordre des comparaisons et l'âge des grandeurs de mouvement (v0S1, v1S1, v2S1, v3S1) pour les comparaisons sont déterminés automatiquement.

4. Procédé selon la revendication 1, 2 ou 3, **caractérisé en ce qu'**au moins deux détecteurs de collision (S1, S2) destinés à mesurer chacun au moins une grandeur de mouvement (aS1, aS2) sont disposés dans le véhicule automobile (1), et **en ce que** les valeurs de mouvement mesurées (aS1, v0S1, v1S1, v2S1, v3S1, aS2, v0S2) pour les comparaisons sont choisies automatiquement.

5. Procédé de fabrication d'un véhicule automobile (1) selon la revendication 1, 2 ou 3, dans lequel au moins deux détecteurs de collision (S1, S2) destinés à mesurer chacun au moins une grandeur de mouvement (as1, as2) du véhicule automobile (1), un appareil de commande (2) pour déterminer un signal d'allumage (COLLISION, AIR, CEINTURE) en fonction d'une multiplicité de comparaisons de la grandeur de mouvement (as1, v0S1, v1S1, v2S1, v3S1, as2, v0S2) avec une multiplicité de valeurs limites ($\delta_{v0S1}$, $\delta_{v1S1}$, $\delta_{v2S1}$, $\delta_{v3S1}$, $\delta_{v0S2}$) et un dispositif de protection d'occupant (15, 16) pouvant être commandé au moyen du signal d'allumage (COLLISION, AIR, CEINTURE) sont disposés dans le véhicule automobile (1), et dans lequel les valeurs limites ($\delta_{v0S1}$, $\delta_{v1S1}$, $\delta_{v2S1}$, $\delta_{v3S1}$, $\delta_{v0S2}$) sont déterminées automatiquement, le nombre des comparaisons est fixé automatiquement, l'ordre des comparaisons est choisi automatiquement, une grandeur de mouvement mesurée (v0S1, v1S1, v2S1, v3S1, v0S2) pour une comparaison est choisie automatiquement ou l'âge des grandeurs de mouvement (v0S1, v1S1, v2S1, v3S1, v0S2) pour les comparaisons est choisi automatiquement.

6. Procédé selon la revendication 4 ou 5, **caractérisé en ce que** les valeurs limites ($\delta_{v0S1}$, $\delta_{v1S1}$, $\delta_{v2S1}$, $\delta_{v3S1}$, $\delta_{v0S1}$) sont déterminées automatiquement, le nombre des comparaisons est fixé automatiquement, l'ordre des comparaisons est choisi automatiquement, une grandeur de mouvement mesurée (v0S1, v1S1, v2S1, v3S1, v0S2) pour une comparaison est choisie automatiquement et l'âge des grandeurs de mouvement (v0S1, v1S1, v2S1, v3S1, v0S2) pour les comparaisons est choisi automatiquement.

7. Procédé selon l'une quelconque des revendications précédentes, **caractérisé en ce que** les valeurs limites ($\delta_{v0S1}$, $\delta_{v1S1}$, $\delta_{v2S1}$, $\delta_{v3S1}$, $\delta_{v0S2}$) sont déterminées au moyen d'un procédé pour générer automatiquement des arbres de décision (80), le nombre des comparaisons est fixé au moyen d'un procédé pour générer automatiquement des arbres de décision (80), l'ordre des comparaisons est choisi au moyen d'un procédé pour générer automatiquement des arbres de décision (80), une grandeur de mouvement mesurée (v0S1, v1S1, v2S1, v3S1, v0S2) pour une comparaison est choisie au moyen d'un procédé pour générer automatiquement des arbres de décision (80) ou l'âge dès grandeurs de mouvement (v0S1, v1S1, v2S1, v3S1, v0S2) pour les comparaisons est choisi au moyen d'un procédé pour générer automatiquement des arbres de décision (80).

8.  Procédé selon l'une quelconque des revendications précédentes, **caractérisé en ce qu'**au moins deux détecteurs de collision (S1, S2) sont disposés à une distance de plus de 0,5 m l'un de l'autre.

9.  Procédé selon l'une quelconque des revendications précédentes, **caractérisé en ce que** l'on utilise comme grandeur de mouvement une valeur moyenne temporelle (v0S1, v1S1, v2S1, v3S1, v0S2) de la grandeur de mouvement (as1, as2) mesurée au moyen du détecteur de collision (S1) sur au moins un premier intervalle de temps ($[t_{0-\tau0}, t_0]$).

Fig. 1

Fig. 2

Fig. 3

Fig. 4

**Fig. 5**

$$\int_{t-\tau_0}^{t} as1 \cdot dt \left[\frac{m}{s}\right]$$

**Fig. 6**

Fig. 7

Fig. 8

vXSY, δ$_{vXSY}$, PNEXT

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5583771 A
- US 5684701 A
- US 6532508 B1
- DE 19854380 A1
- DE 10035505 A1
- DE 10040111 A1
- DE 10103661 C1
- US 20020147533 A1
- DE 10016142 A1

**In der Beschreibung aufgeführte Nicht-Patentliteratur**

- **NILSSON, N. J.** INTRODUCTION TO MACHINE LEARNING - AN EARLY DRAFT OF A PROPOSED TEXTBOOK. 26. September 1996
- Induction of Decision Trees. **QUINLAN, R.** Machine Learning. Kluwer Academic Publishers, 1986, 81-106